# EUROPEAN PATENT SPECIFICATION

(11) **EP 1 297 490 B1**
(45) Date of publication and mention of the grant of the patent: **26.01.2011**
(21) Application number: 01940778.2
(22) Date of filing: 20.06.2001
(51) Int. Cl.: G06K 19/06

(54) **BAR CODE SYSTEM**
STRICHKODESYSTEM
SYSTEME DE CODE A BARRES

(30) Priority: 21.06.2000 GB 0015222
(43) Date of publication of application: 02.04.2003
(73) Proprietor: Money Controls PLC, Oldham OL2 6JZ (GB)
(72) Inventor: D'HAENS, Joseph, Paul, Mariette, B-2520 Ranst-Emblem (BE); JANSEN, Jan, B-2200 Noorderwijk (BE); BELL, Malcolm, Reginald, Hallas, Leeds LS16 5PQ (GB)
(74) Representative: Walaski, Jan Filip
(86) International application number: PCT/GB2001/002720
(87) International publication number: WO 2001/099047

(56) References cited:
- EP-A2- 0 180 283
- FR-A- 2 625 348
- US-A- 3 808 405
- US-A- 5 260 556

## Description

### Field of the Invention

The present invention relates to a method of bar coding an object comprising forming a data pattern on an object, and forming a clock pattern on the object, the clock pattern being aligned with the data pattern for providing a data pattern sampling signal and to a bar-coded object, e.g. a sheet or a coin-like object, having a data pattern and a clock pattern formed as concentric rings, the clock pattern being aligned with the data pattern for providing a data pattern sampling reference.

### Background to the Invention

Bar codes are well known and are widely used for marking objects with machine-readable information. Everyone is familiar with the bar codes found on groceries for instance.

Conventional 1-dimensional bar codes suffer from the problem that the object carrying the bar code must be oriented correctly for a bar code scanner to be able to read the bar code. Consequently, bar codes have not been successfully used on objects that can have an arbitrary orientation during handling, for example tokens or coins in an acceptor, CDs and CD-ROMs, without special means being provided to put the object into the correct orientation for reading of the bar code. However, the provision of such special means is itself undesirable and a disincentive to the use of bar codes on arbitrarily orientable objects because of the mechanical complexity that would be introduced into the object handling apparatus.

A circular barcode including an inner data patter and an outer clock pattern is described in GB-A-1218349. However, the described bar code cannot be read at arbitrary orientations while moving linearly. Instead, the code must be rotated through 360°.

FR 2 625 348 discloses a barcode having a plurality of concentric rings. A data pattern is defined by the distances between the outer edges of adjacent concentric rings.

### Summary of the Invention

The invention is defined by the claims

A bar-coded object according to the present invention is **characterised in that** the data pattern comprises a plurality of repetitions of the same information arranged in a ring such that a complete instance of said information can be obtained from a single chordal scan through the data pattern without limitation on the direction of said scan, the object further including a substantially circular reference pattern concentric with the clock pattern, the reference pattern identifying the start of each repetition of said information..

Thus, since the clock pattern moves with the data pattern, it can be used to trigger sampling of the data pattern. Consequently, the process of reading of the data is not affected by variations in the speed of the object. Furthermore, the barcode can read regardless of the orientation of the object about the axis passing perpendicularly through the centre of the bar code rings.

The patterns are preferably optically readable. However, the patterns may be, for example, magnetically readable.

The data pattern elements are preferably binary in nature. However, a multilevel code could be used.

The clock pattern and the data pattern are formed as concentric rings. The data pattern is preferably located inwards of the clock pattern.

The data pattern is preferably located within the clock pattern and the clock pattern is preferably located inwards of the reference pattern. Alternatively, the clock pattern may be located within the data pattern and the data pattern is located inwards of the reference pattern.

The presence of some form of "start" making means that, as long as all of the elements required for one instance of the information are read, even if the end part is read before the beginning, the start of the information can be found when reading the data pattern and the information recovered.

Advantageously, the start of each repetition is marked.

According to the present invention, there is provided a method of forming a coin-like object, e.g. a coin or a token, including bar coding the object by a method according to the present invention.

According to the present invention, there is provided a method of reading a bar-coded object according to the present invention, the method comprising scanning said patterns simultaneously and determining the values of data pattern elements at times defined by said clock pattern.

For coin-like or substantially disc-shaped objects, the reading method preferably comprises simultaneously scanning said patterns chordally and determining the values of the data pattern elements at times defined by said clock pattern.

According to the present invention, there is provided a bar code reading apparatus for reading a bar code on an object according to the present invention, the apparatus comprising scanning means for simultaneously scanning said patterns chordally and means for determining the values of data pattern elements at times defined by said clock pattern.

Processing means may be included for re-ordering said pattern element values to recover said information. In this case, the processing means is preferably configured for identifying a start position and, if necessary, moving one or more bits from before the start position to a position after the start position.

Preferably, another part of each of the patterns is simultaneously scanning chordally also, the values of the data elements obtained in each scanning of the data pattern are compared and an error condition is signalled if there is a mismatch between information represented by the values obtained from said scans of the data pattern.

The or each scanning may be performed by guiding a bar-coded object past a fixed sensor station.

Preferably, a first sensor is used for sensing the data pattern, a second sensor is used for sensing the clock pattern and a third sensor is used for sensing a start position reference.

Processing means may be configured such that a representation of said information is built from the output of the first sensor and cleared in dependence on the output of the third sensor. Preferably, the processing means counts pattern elements during said building and resets the pattern element count in dependence on the output of the third sensor. More preferably, the processing means is configured to produce an output if said reference meets a predetermined criterion when the pattern element count is at a threshold value.

A bar code reading apparatus according to the present invention may be used in a validator for coin-like objects.

### Brief Description of the Drawings

Figure 1 shows a first bar-coded object according to the present invention in a first orientation;
Figure 2 shows the first bar-coded object of Figure 1 in a second orientation;
Figure 3 is an exaggerated, partial sectional view of the object of Figure 1;
Figure 4 is a side sectional view of part of the coin path of a coin validator according to the present invention with a coin-like object present;
Figure 5 is a side sectional view of part of the coin path of a coin validator according to the present invention without a coin-like object being present;
Figure 6 is a partially cut away front view of the coin validator of Figure 4;
Figure 7 is a block diagram of the optical signal processing circuitry of the coin validator of Figure 4;
Figure 8 is a set of flowcharts illustrating the operation of the bar code processing of the validator of Figure 4;
Figure 9 is a waveform diagram illustrating the operation of the circuit of Figure 7 with the object as shown in Figure 1;
Figure 10 is a waveform diagram illustrating the operation of the circuit of Figure 7 with the object as shown in Figure 2;
Figure 11 shows a second bar-coded object according to the present invention;
Figure 12 is a waveform diagram illustrating the signals obtained by optically sensing the object of Figure 11;
Figure 13 shown a third bar-coded object according to the present invention in a first orientation;
Figure 14 shows the third bar-coded object of Figure 13 in a second orientation;
Figure 15 is a side sectional view of part of the coin path of a coin validator according to the present invention with a coin-like object present;
Figure 16 is a side sectional view of part of the coin path of the coin validator of Figure 15 without a coin-like object being present;
Figure 17 is a partially cut away front view of the coin validator of Figure 15;
Figure 18 is a block diagram of the optical signal processing circuitry of the coin validator of Figure 15;
Figure 19 is a set of flowcharts illustrating the operation of the bar code processing of the validator of Figure 18;
Figure 20 is a waveform diagram illustrating the operation of the circuit of Figure 18 with the third object as shown in Figure 13; and
Figure 21 is a waveform diagram illustrating the operation of the circuit of Figure 18 with the third object as shown in Figure 14.

### Detailed Description of Preferred Embodiments

Embodiment of the present invention will now be described, by way of example, with reference to the accompanying drawings.

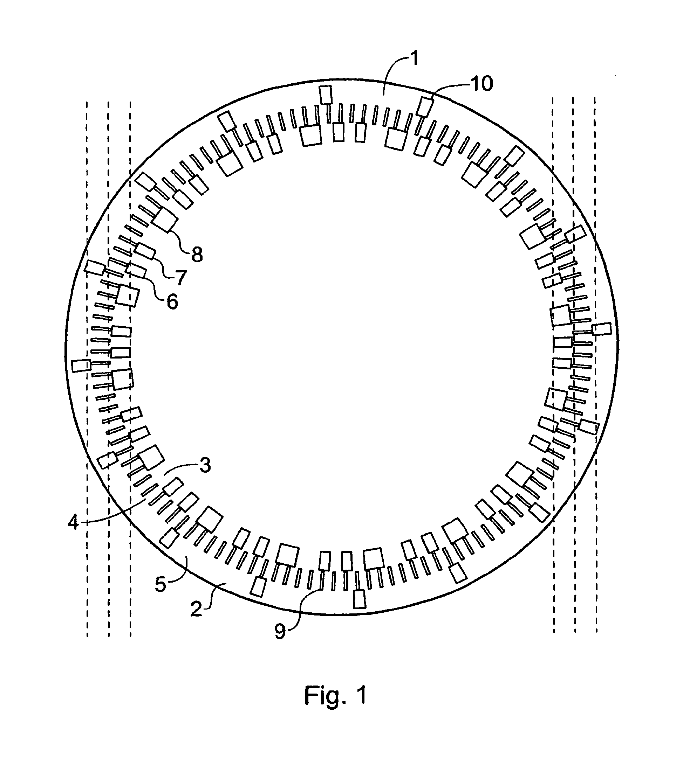

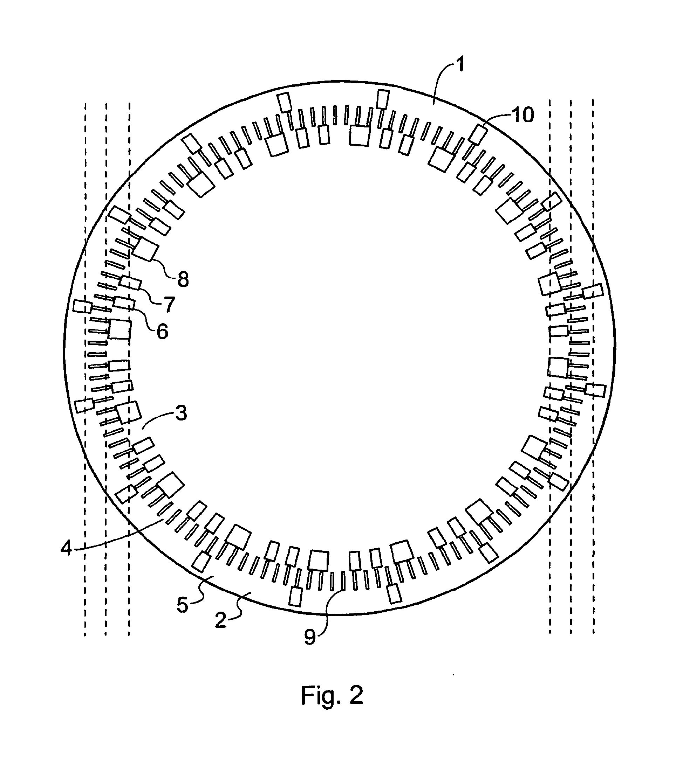

Referring to Figures 1 and 2, a bar-coded token 1 according to the present invention comprises a disc-shaped substrate 2. Three rings of "light" and "dark" markings 3, 4, 5 are formed concentrically on the substrate 2. The inner ring 3 comprises a repeating pattern of dark markings 6, 7, 8 on a light background. The circumferential extent of each of the dark markings 6, 7, 8 is defined by a pair of radii of the inner ring 3 so that they taper towards its middle. In the present example, the inner ring 3 comprises sixteen repetitions of the binary code for "83".

The middle ring 4 comprises 128 equispaced, dark radial bars 9 on a light background. The dark radial bars 9 are all the same size and significantly narrower than the widest part of the 1-bit dark markings 6, 7 in the inner ring 3. The purpose of the middle ring 4 is to provide a "clock" signal for the sampling of the bits of the inner and outer ring patterns 3, 5.

The outer ring 5 comprises 16 equispaced bars 10 which are broadened radial extensions of respective bars 8 of the middle ring 4. The purpose of the bars 10 in the outer ring 5 is to mark the start of each pattern repetition in the inner ring 3.

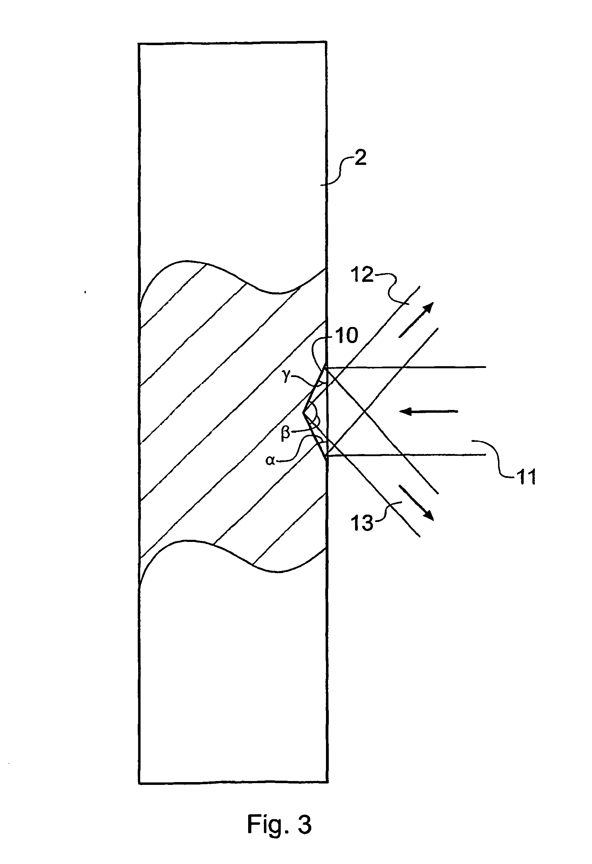

Referring to Figure 3, the "dark" markings (an outer ring marking 10 is shown) comprise depressions in the substrate 2, which in this example is metallic and therefore inherently reflective. These depressions are prism-shaped with their axes extending radially with respect to the substrate 2. The angles α, β, γ at the edges of the prism-shaped depressions are chosen so as to avoid retroreflection. In the example shown, angles α and γ are 30° and angle β is 120°. Consequently, a sensor positioned beside the source of a beam 11 incident perpendicularly on the substrate 2 will be avoided by the reflected beams 12, 13 from a depression.

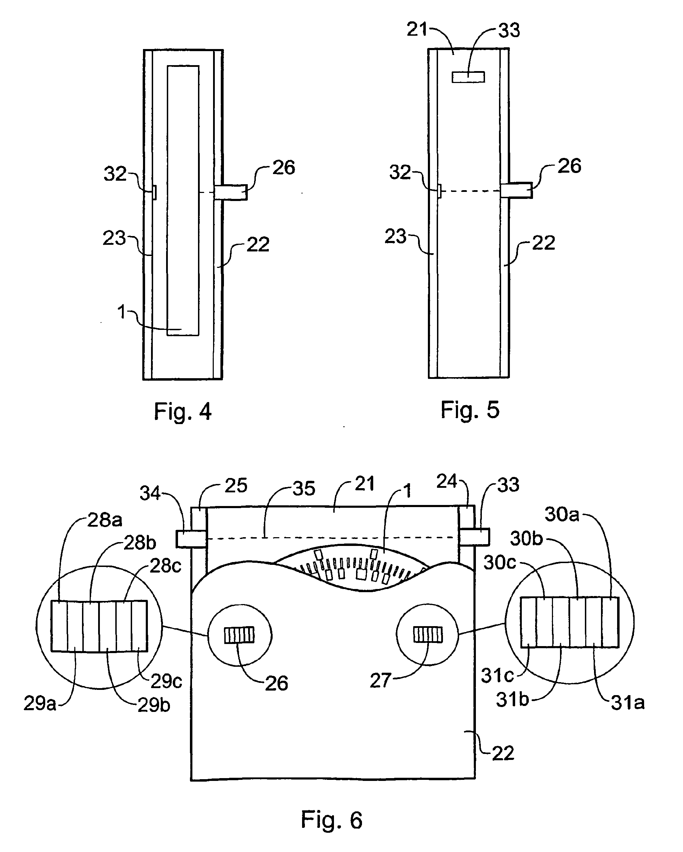

Referring to Figures 4, 5 and 6, a validator for coin-like objects 1 has a vertical coin path 21 defined by front and back walls 22, 23 and first and second side walls 24, 25. Left and right sensor stations 26, 27 are mounted to the front wall 22. The left sensor station 26 is located at the left side of the front wall 22 and comprises three light emitting diode units 28a, 28b, 28c alternating with three photo-sensors 29a, 29b, 29c. The right sensor station 17 is located at the right side of the front wall and is similarly constructed with three light emitting diode units 30a, 30b, 30c and three photo-sensors 31a, 31b, 31c. It is preferred that at least the middle light emitting diode unit 28b, 30b of each sensor station 26, 27 emits a beam which is narrower than the circumferential width of the "dark" markings 9 of the middle ring 4. A laser diode may be usefully employed for this purpose, and indeed for the other light emitting diode units 28a, 28c, 30a, 30c. The narrower beam produces sharper transitions in the output signals of the corresponding photo-sensor. Sharp transitions are particularly desirable in the case of the clock markings in the middle ring because, as will be seen, it is the light-to-dark transitions of the clock ring 4 that trigger sampling of the photo-sensor signals for the inner and outer rings 3, 5.

A strip 32 of retroreflective material is affixed across the back wall 23 to reflect light from the light emitting diode units 28a, 28b, 28c, 30a, 30b, 30c back to the photo-sensor 29a, 29b, 29c, 31a, 31b, 31c in the absence of a coin-like object 1.

An infrared light-emitting diode (LED) 33 is mounted in the first side wall 24 and an infrared light sensor 34 is mounted in the second side wall 25 directly opposite the LED 33. The LED 33 and the light sensor 34 are for detecting the passage of a coin-like object 1 and are located above, the sensor stations 26, 27 such that the beam 35 from the LED 33 to the light sensor 34 ceases to be broken by a coin-like object 1 when the sensor stations 26, 27 can no longer properly detect the rings 3, 4, 5 on the coin-like object 1.

The coin path 21 is dimensioned so that it is just wide and thick enough for the coin-like object 1 to fall freely therein.

Referring again to Figures 1 and 2, the dashed lines indicate the "tracks" of the photo-sensors 29a, 29b, 29c, 31a, 31b, 31c as the coin-like object 1 falls past the sensor stations 26, 27.

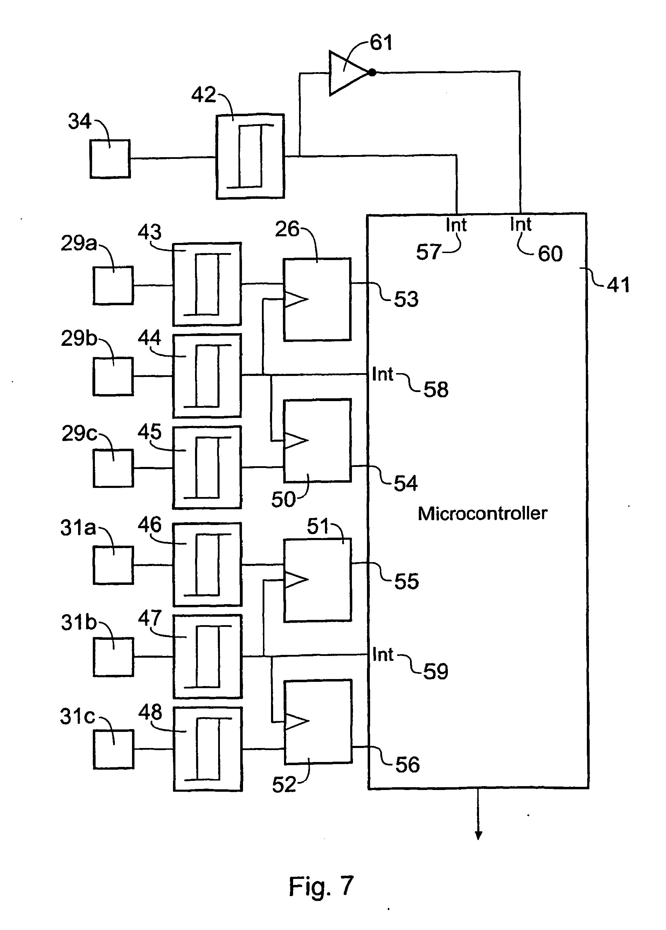

Referring to Figure 7, the optical signal processing circuit of the validator comprises a microcontroller 41, seven signal conditioning circuits 42, ..., 48, four latches 49, 50, 51, 52 and an inverter 61. The microcontroller 41 has at least first to fourth 1-bit inputs 53, 54, 55, 56 and at least first to fourth rising edge triggered interrupt ports 57, 58, 59, 60.

The first signal conditioning circuit 42 is connected between the light sensor 34 and the first interrupt port 57. The output of the first signal conditioning circuit 42 is also connected to the input of the inverter 61. The output of the inverter 61 is connected to the fourth interrupt port 60. The first signal conditioning circuit 42 squares and inverts the output of the light sensor 34. A delay may need to be interposed between the inverter 61 and the fourth interrupt port 60 to ensure that processing is not terminated while the bar code patterns are still being sensed by the left and right sensor stations 26, 27.

The second signal conditioning circuit 43 is connected between the first photo-sensor 29a of the left sensor station 26 and the data input of the first latch 49. The output of the first latch 49 is connected to the first 1-bit input 53. The second signal conditioning circuit 43 squares and inverts the output of the first photo-sensor 29a of the left sensor station 26.

The third signal conditioning circuit 44 is connected between the second photo-sensor 29b of the left sensor station 26 and the second interrupt port 58. The output of the third signal conditioning circuit 44 is also connected to the clock inputs of the first and second latches 49, 50. The third signal conditioning circuit 44 squares and inverts the output of the second photo-sensor 29b of the left sensor station 26 before applying it to the second interrupt port 58.

The fourth signal conditioning circuit 45 is connected between the third photo-sensor 29c of the left sensor station 26 and the data input of the second latch 50. The output of the second latch 50 is connected to the second 1-bit input 54. The fourth signal conditioning circuit 45 squares and inverts the output of the third photo-sensor 29c of the left sensor station 26.

The fifth signal conditioning circuit 46 is connected between the first photo-sensor 31a of the right sensor station 27 and the data input of the third latch 51. The output of the third latch 51 is connected to the third 1-bit input 55. The fifth signal conditioning circuit 46 squares and inverts the output of the first photo-sensor 31a of the right sensor station 27.

The sixth signal conditioning circuit 47 is connected between the second photo-sensor 31b of the right sensor station 27 and the third interrupt port 59. The output of the signal conditioning circuit 47 is also connected to the clock inputs of the third and fourth latches 51, 52. The sixth signal conditioning circuit 47 squares the output of the second photo-sensor 31b of the right sensor station 27 before applying it to the third interrupt port 59.

The seventh signal conditioning circuit 48 is connected between the third photo-sensor 31c of the right sensor station 27 and the data input of the fourth latch 52. The output of the fourth latch 52 is connected to the fourth 1-bit input 56. The seventh signal conditioning circuit 48 squares and inverts the output of the third photo-sensor 31c of the right sensor station 27.

The microcontroller 41 also has a control output to an accept gate (not shown) of the validator.

The operation of the validator with the coin-like object 1 will now be described.

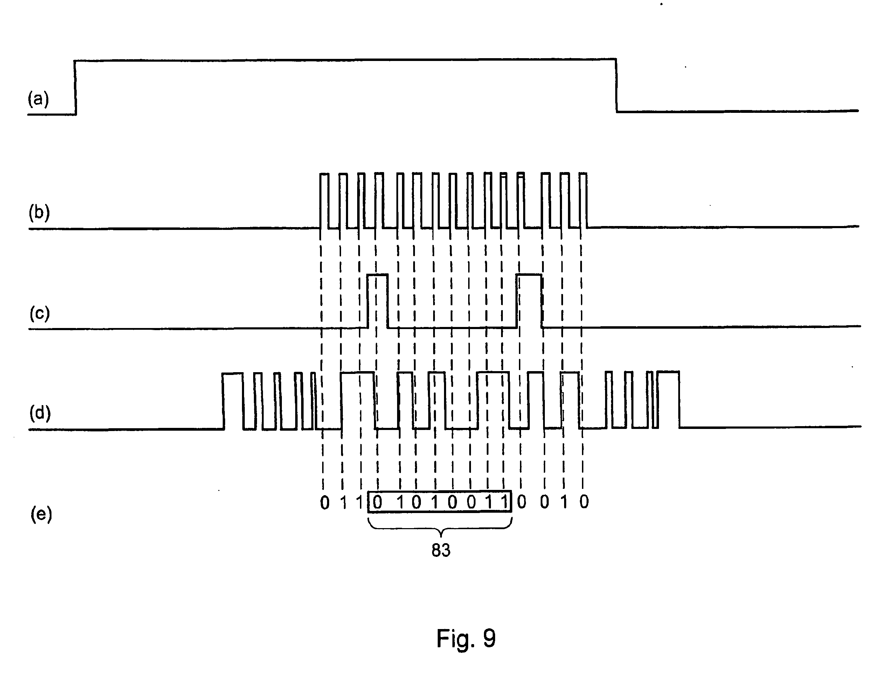

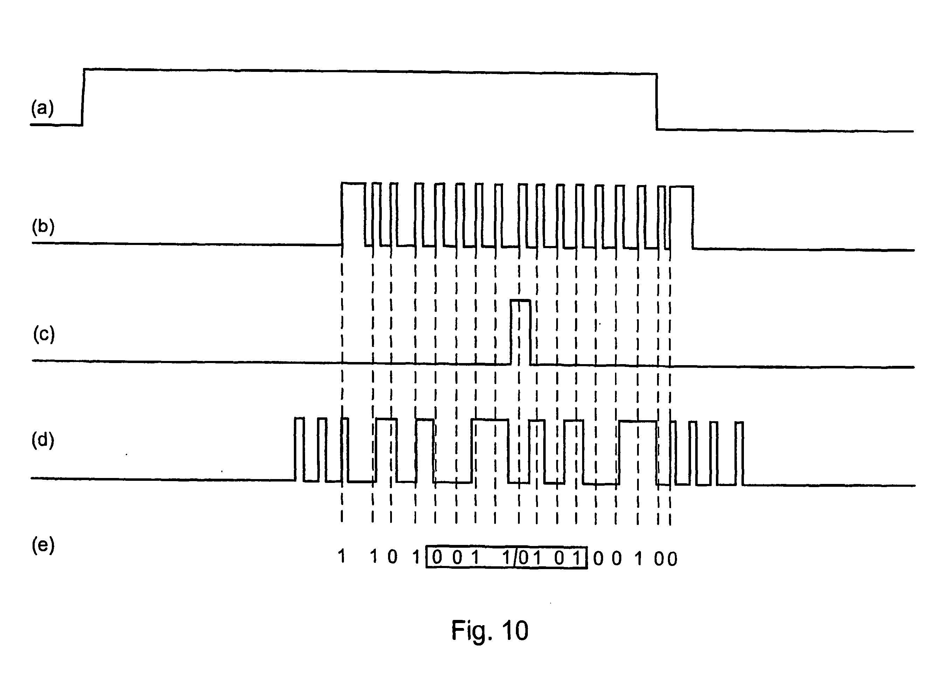

Figures 9(a) and 10(a) show the output of the first signal conditioning circuit 42 as the object 1 passes. Figures 9(b) and 10(b) show the output of the third signal conditioning circuit 44 as the object 1 passes, oriented as shown in Figures 1 and 2 respectively. Figures 9(c) and 10(c) show the output of the second signal conditioning circuit 43 as the object 1 passes, oriented as shown in Figures 1 and 2 respectively. Figures 9(d) and 10(d) show the output of the fourth signal conditioning circuit 45 as the object 1 passes, oriented as shown in Figures 1 and 2 respectively. Figures 9(e) and 10(e) show the data read in by the microcontroller 41 with the object 1 oriented as shown in Figures 1 and 2 respectively.

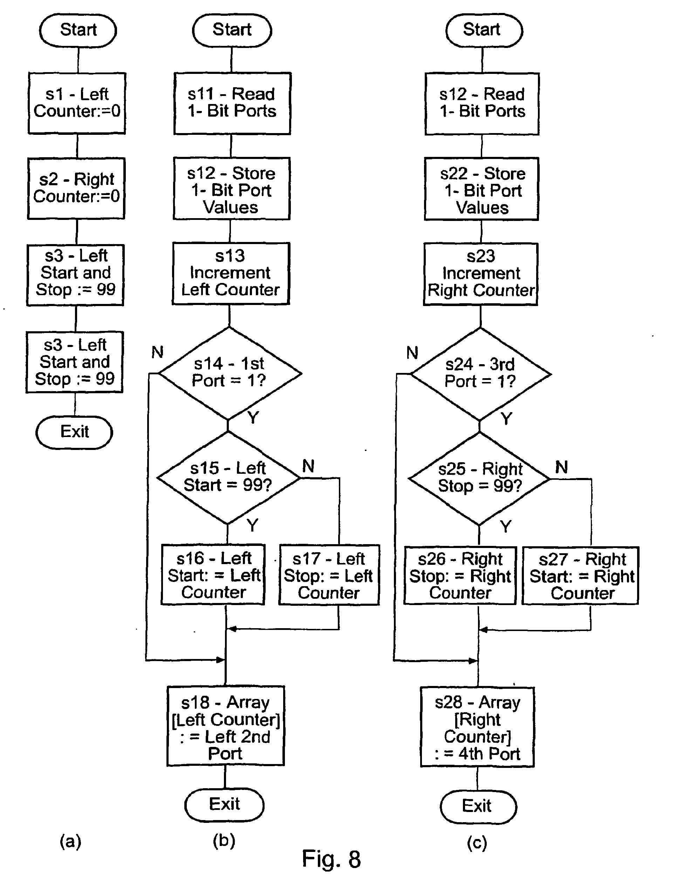

Referring to Figures 9 and 10, the microcontroller 41 is alerted to the coin-like object 1 being in the coin path 11 by the output of the first signal conditioning circuit 42 going high (see Figures 9(a) and 10(a)). The microcontroller 41 responds by performing a first interrupt routine (see Figure 8(a)). The first interrupt routine includes setting left and right counts to zero (steps s1 and s2) and setting left and right start and stop bit positions to a default value (99 in this case) (steps s3 and s4).

As the coin-like object 1 progresses down the coin path 11, it encounters the beams from the laser diode units 28a, 28b, 28c, 30a, 30b, 30c and reflects them to the respective photo-sensors 29a, 29b, 29c, 31a, 31b, 31c. Thus, reflections from the coin-like object 1 replace reflections from the retroreflective strip 32 (Figures 4 and 5).

Until the output of the first signal conditioning circuit 42 changes state again, the operation of the circuit of Figure 7 is controlled by the outputs (Figures 9(b) and 10(b)) of the middle photo-sensors 29b, 31b of the left and right sensor stations 26, 27.

Considering the case of the left sensor station 26, each time the output of the second photo-sensor 29b goes low, the output of the third signal conditioning circuit 44 goes high. This causes the outputs of the second and fourth signal (Figures 9(c) and (d) and 10(c) and (d)) conditioning circuits 43, 45 to be loaded into the first and second latches 49, 50. The second interrupt port 58 detects the rising edge as the output of the third signal conditioning circuit 44 goes high and initiates a second interrupt routine (Figure 8(b)). Latching the outputs (Figures 9(e) and 10(e)) of the second and fourth signal conditioning circuits 43, 45 ensures that the desired photo-sensor output values is maintained until the first interrupt routine has been able to read the first and second 1-bit ports 53, 54, irrespective of any actual changes in the photo-sensor outputs.

In the second interrupt routine, the microcontroller 41 first reads (step s11) and stores (step s12) the values (1 or 0) at the first and second 1-bit ports 43, 44. The first and second 1-bit ports 43, 44 may be elements of a single 8-bit port, in which case reading these ports is a single operation.

After reading the first and second 1-bit ports 43, 44, the microcontroller 41 increments the left count (step s13). If the first 1-bit port's value was 1 (step s14) and the left start bit position (LeftStart) value is 99 (step s15), the microcontroller 41 assigns the left count value to the left start bit position (step s16). Otherwise, the first 1-bit port's value is assigned to the left stop bit position (LeftStop) (step s17). The second 1-bit port's value is stored in the elements of an array indexed by the left count value (step s18).

Considering now the case of the right sensor station 27, each time the output of the second photo-sensor 31b goes high, the output of the sixth signal conditioning circuit 47 goes high. This causes the outputs of the fifth and seventh signal conditioning circuits 46, 48 to be loaded into the third and fourth latches 51, 52. The third interrupt port 59 detects the rising edge as the output of the sixth signal conditioning circuit 47 goes high and initiates a third interrupt routine (Figure 8(c)).

In the third interrupt routine, the microcontroller 41 first reads (step s21) and stores the values (1 or 0) at the third and fourth 1-bit ports 55, 56 (step s22).

After reading the third and fourth 1-bit ports 55, 56, the microcontroller 41 increments the right count (step s23). If the fourth 1-bit port's value was 1 (step s24) and the right stop bit position value is 99 (step s25), the microcontroller 41 assigns the right count value to the right stop bit position (RightStop) (step s26). Otherwise, the third 1-bit port's value is assigned to the right start bit position (RightStart) (step s27). The fourth 1-bit port's value is stored in the elements of another array indexed by the right count value (step s28).

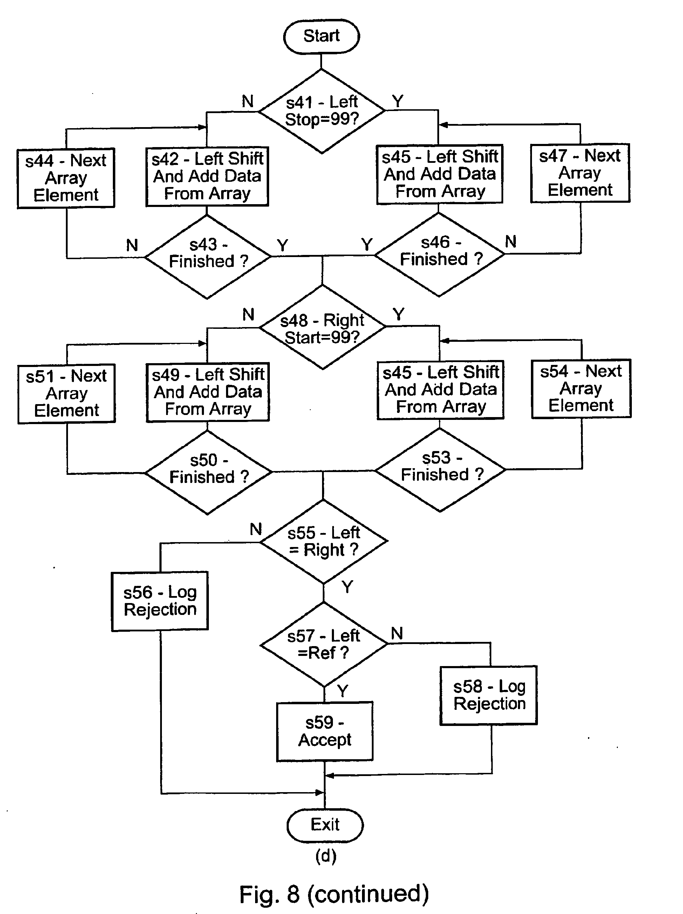

When the coin-like object 1 completes its passage through the light beam 35, the light sensor 34 is again illuminated and the output of the first signal conditioning circuit 42 goes low, causing the output of the inverter 61 to go high. This triggers a fourth interrupt routine (Figure 8(d)).

In the fourth interrupt routine, the microcontroller 41 processes the signals from the sensor stations 26, 27.

Starting with the left sensor station 26, the microcontroller 41 determines whether a stop bit was detected by determining whether the stop bit value equals 99 (step s41). If not, i.e. a stop bit was found, as would be the case with the object shown in Figure 1, the microcontroller 41 enters a loop (steps s42, s43 and s44) in which the data is reassembled thus: -

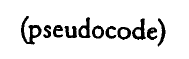

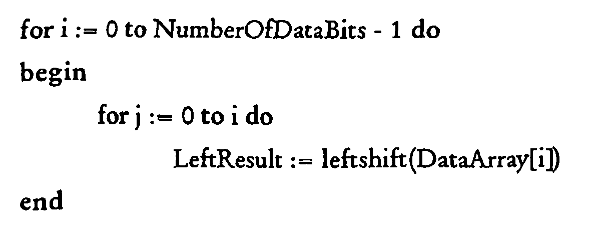

Otherwise, for instance in the case of the object as shown in Figure 2, the microcontroller 41 enters another loop (steps s45, s46 and s47) in which the data is reassembled thus:-

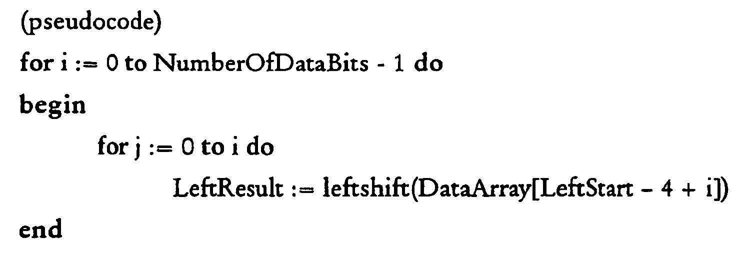

After the data (LeftResult) from the left sensor station 26 has been reassembled, the microcontroller 41 reassembles the data (RightResult) from right sensor station 27. The microcontroller 41 determines whether a start bit was detected by determining whether the start bit value equals 99 (step s48). If not, i.e. a start bit was found, the microcontroller 41 enters a loop (steps s49, s50 and s51) in which the data is reassembled thus: -

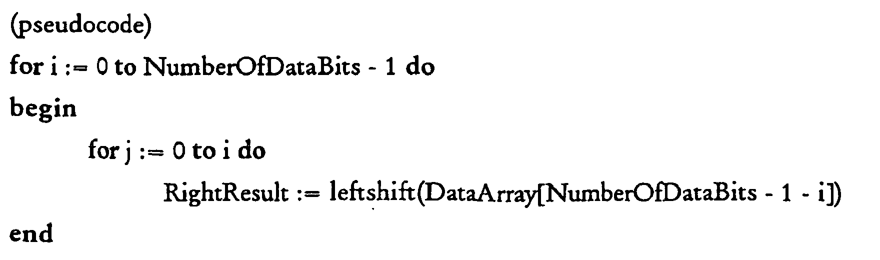

Otherwise, the microcontroller 41 enters another loop (steps s52, s53 and s54) in which the data is reassembled thus:-

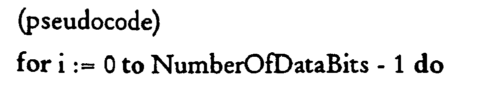

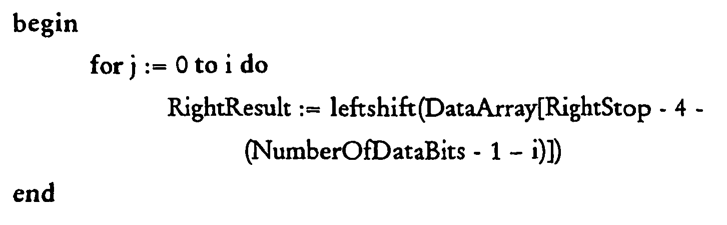

When the data (LeftResult and RightResult) from the left and right sensor stations 26, 27 has been recovered, the microcontroller 41 compares them (step s55) and, if they do not match, the microcontroller 41 logs a rejection (step s56) and exits the fourth interrupt routine. However, if they do match, the microcontroller 41 compares the recovered data with a reference value, "83" in this case, (step s57). If the recovered value does not match the reference value, the microcontroller 41 logs a rejection (step s58) and exits the fourth interrupt routine. However, if they do match, the microcontroller 41 sends a signal to open the accept gate of the validator (step s59) and exits the fourth interrupt routine.

It is to be understood that the signal for opening the accept gate may be produced subject to the coin-like object passing additional tests using, for example, electromagnetic sensors, as are well-known in the art.

A second embodiment of the present invention will now be described.

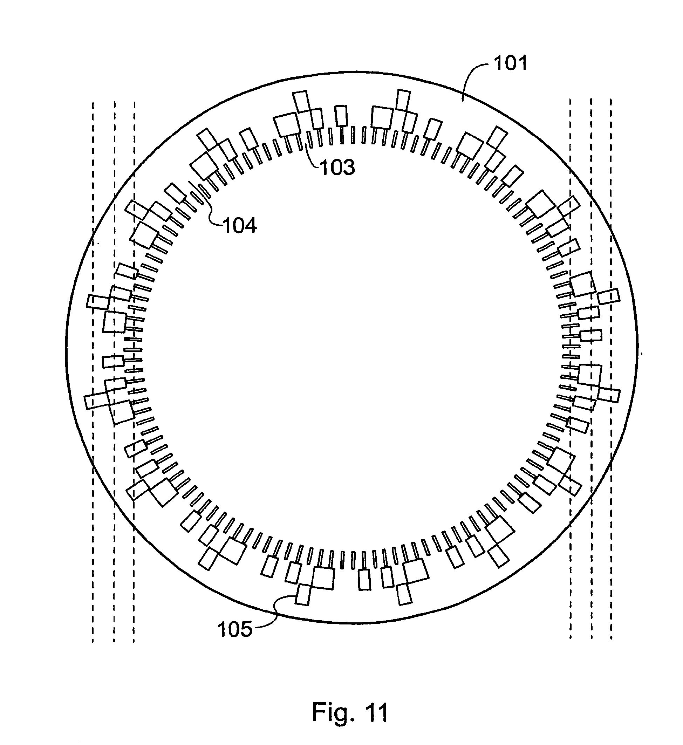

Referring to Figure 11, a bar-coded object 101 is substantially the same as that shown in Figure 1 save that the inner ring 103 holds the "clock" pattern and the middle ring 104 holds the data.

The validator shown in Figures 4, 5 and 6 can be used with the token of Figure 11 by the simple expedient of swapping the positions of the second and third photo-sensors 29b, 29c, 31b, 31c within each sensor station 26, 27. It will be appreciated that no changes are required to the circuit of Figure 7 if these sensors are swapped as described.

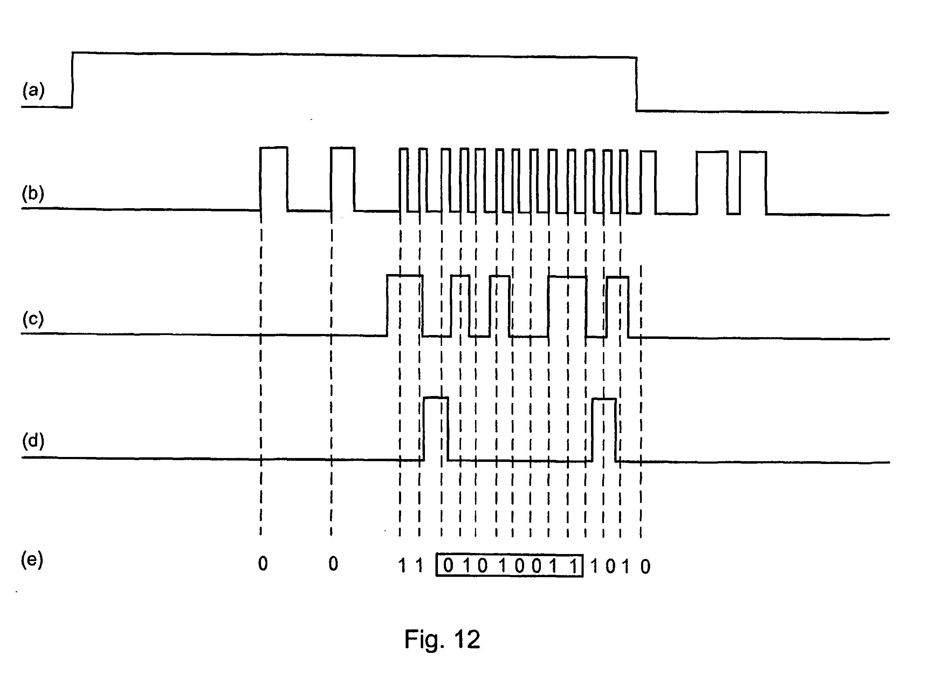

Figure 12(a) shows the output of the first signal conditioning circuit 42 as the object 101 passes. Figure 12(b) shows the output of the third signal conditioning circuit 44 as the object 101 passes, oriented as shown. Figure 12(c) shows the output of the fourth signal conditioning circuit 43 as the object 101 passes, oriented as shown. Figure 12(d) shows the output of the second signal conditioning circuit 45 as the object 101 passes, , oriented as shown. Figure 12(e) shows the data read in by the microcontroller 41 with the object 101 oriented as shown.

Referring to Figures 11 and 12, it can be seen that as the "track" 110 of the third photo-sensor 29b, now the furthest inboard, of the left sensor station 26 crosses the middle ring 104, the output of the third photo-sensor 29b changes, causing the microcontroller 41 to read the data and start bit values from the first and second latches 49, 50. In the example shown, the result is two extra 0s at the beginning of the read data. No unwanted samples are taken at the end because the beam 35 is no longer broken (Figure 12(a)). This is not a problem, because these bits will be ignored when the true data is located using the start bit position. However, care must be taken when designing the bar code to ensure that false clocking by the middle ring 104 does not result in the outer photo-sensors 29a, 31a detecting dark regions and a start or stop bit being falsely identified.

Since, the start bits are crucial in the first and second embodiments for locating the "good" data, the start bits should be in the outer ring to prevent the start bit photo-sensor having the possibility of sensing data in the wrong ring.

A third embodiment of the present invention will now be described.

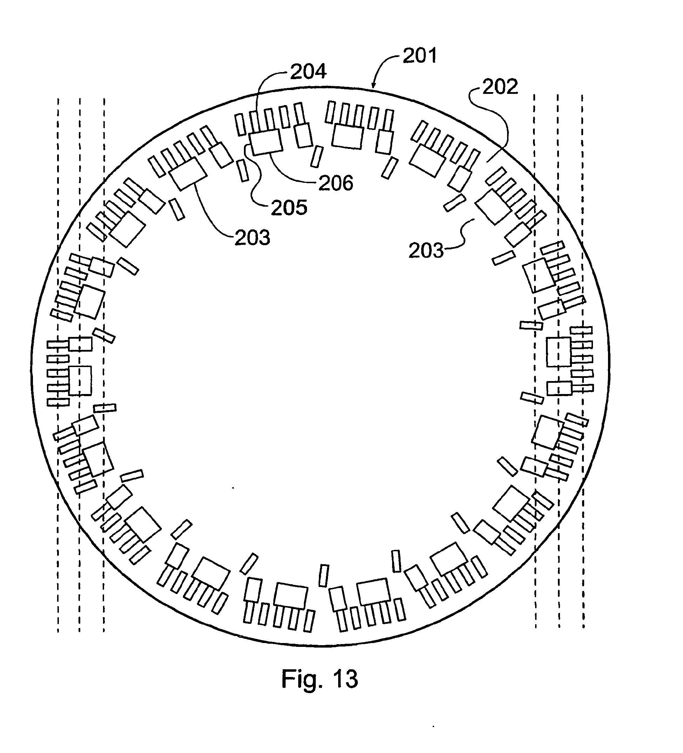

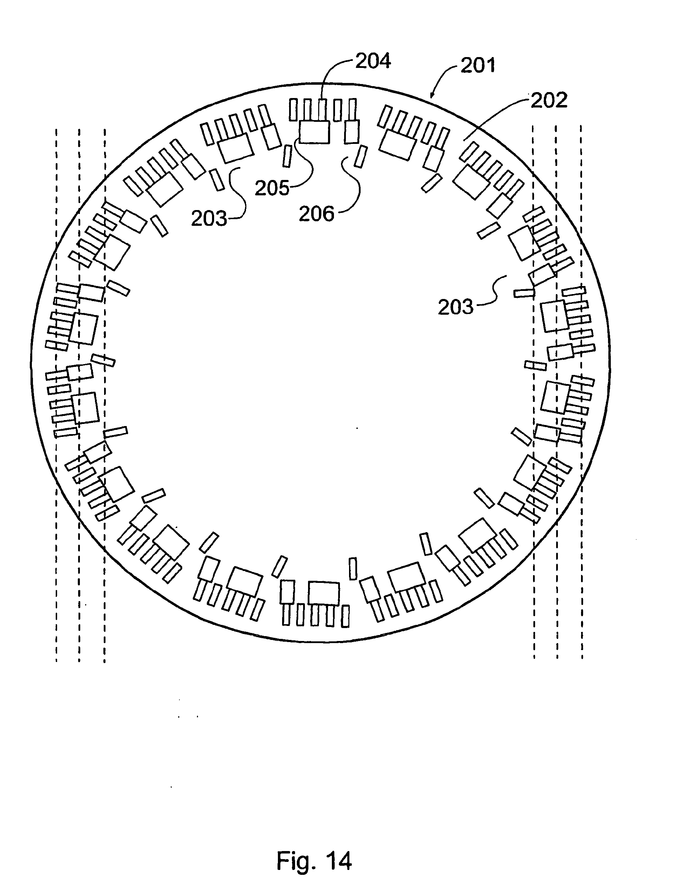

Referring to Figures 13 and 14, a third bar-coded token 201 according to the present invention comprises a disc-shaped substrate 202. Eighteen barcode blocks 203 are arranged in a ring around the margin of the face of the substrate 202. Each barcode block 203 is aligned along a chord of the substrate and comprises outer, middle and inner tracks 204, 205, 206 comprising alternating light and dark regions. The outer track 204 of each block 203 comprises a clock pattern. The middle track 205 of each block 203 comprises a 5-bit data pattern. The inner track 206 of each block contains a start position marker. In the present example, the middle tracks 204 all comprise the binary code for "13".

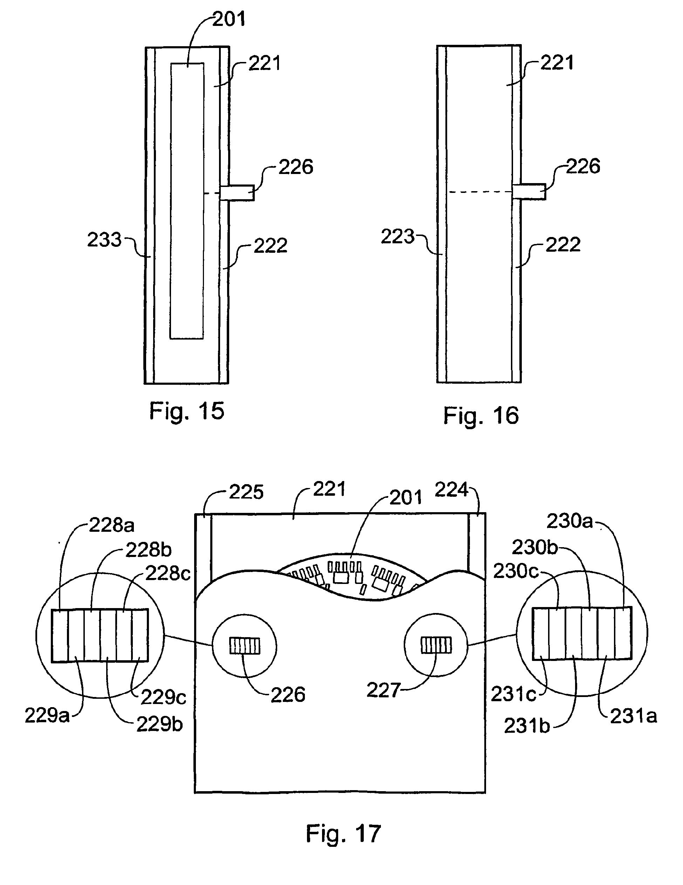

Referring to Figures 15, 16 and 17, a validator for coin-like objects 201 has a vertical coin path 221 defined by front and back walls 222, 223 and first and second side walls 224, 225. Left and right sensor stations 226, 227 are mounted to the front wall 222. The left sensor station 226 is located at the left side of the front wall 222 and comprises three light emitting diode units 228a, 228b, 228c alternating with three photo-sensors 229a, 229b, 229c. The right sensor station 227 is located at the right side of the front wall and is similarly constructed with three light emitting diode units 230a, 230b, 230c and three photo-sensors 231a, 23 it, 231c. It is preferred that at least the middle light emitting diode unit 228b, 230b of each sensor station 226, 227 emits a beam which is narrower than the circumferential width of the "dark" markings outer tracks 204. A laser diode may be usefully employed for this purpose, and indeed for the other light emitting diode units 228a, 228c, 230a, 230c. The narrower beam produces sharper transitions in the output signals of the corresponding photo-sensor. Sharp transitions are particularly desirable in the case of the clock patterns in the outer tracks 204 because, as will be seen, it is the light-to-dark transitions of these patterns that trigger sampling of the photo-sensor signals for the inner and middle tracks 205, 206.

The coin path 21 is dimensioned so that it is just wide and thick enough for the coin-like object 201 to fall freely therein.

Referring again to Figures 13 and 14, the dashed lines indicate the "tracks" of the photo-sensors 229a, 229b, 229c, 231a, 231b, 231c as the coin-like object 201 falls past the sensor stations 226, 227.

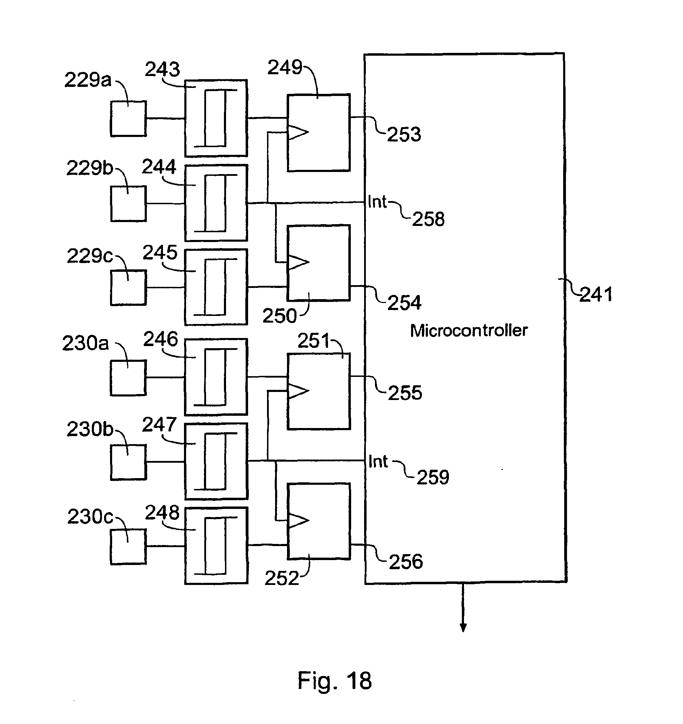

Referring to Figure 18, the optical signal processing circuit of the validator comprises a microcontroller 241, six signal conditioning circuits 243, ..., 247 and four latches 249, 250, 251, 252. The microcontroller 241 has at least first to fourth 1-bit inputs 253, 254, 255, 256 and at least first and second rising edge triggered interrupt ports 258, 259.

The first signal conditioning circuit 243 is connected between the second photo-sensor 229b of the left sensor station 226 and the data input of the first latch 249. The output of the first latch 249 is connected to the first 1-bit input 253. The first signal conditioning circuit 243 squares and inverts the output of the second photo-sensor 229b of the left sensor station 226. The second signal conditioning circuit 244 is connected between the first photo-sensor 229a of the left sensor station 226 and the second interrupt port 258. The output of the second signal conditioning circuit 244 is also connected to the clock inputs of the first and second latches 249, 250. The second signal conditioning circuit 244 squares and inverts the output of the first photo-sensor 229a of the left sensor station 226 before applying it to the second interrupt port 258.

The third signal conditioning circuit 245 is connected between the third photo-sensor 229c of the left sensor station 226 and the data input of the second latch 250. The output of the second latch 250 is connected to the second 1-bit input 254. The third signal conditioning circuit 245 squares and inverts the output of the third photo-sensor 229c of the left sensor station 226.

The fourth signal conditioning circuit 246 is connected between the second photo-sensor 231b of the right sensor station 227 and the data input of the third latch 251. The output of the third latch 251 is connected to the third 1-bit input 255. The fourth signal conditioning circuit 246 squares and inverts the output of the second photo-sensor 241a of the right sensor station 227.

The fifth signal conditioning circuit 247 is connected between the first photo-sensor 231a of the right sensor station 227 and the third interrupt port 259. The output of the fifth signal conditioning circuit 247 is also connected to the clock inputs of the third and fourth latches 251, 252. The fifth signal conditioning circuit 247 squares the output of the first photo-sensor 231b of the right sensor station 227 before applying it to the third interrupt port 259.

The sixth signal conditioning circuit 248 is connected between the third photo-sensor 231c of the right sensor station 227 and the data input of the fourth latch 252. The output of the fourth latch 252 is connected to the fourth 1-bit input 256. The sixth signal conditioning circuit 248 squares and inverts the output of the third photo-sensor 231c of the right sensor station 227.

The microcontroller 241 also has a control output to an accept gate (not shown) of the validator.

The operation of the validator shown in Figures 15 to 18 with the coin-like object 201 will now be described.

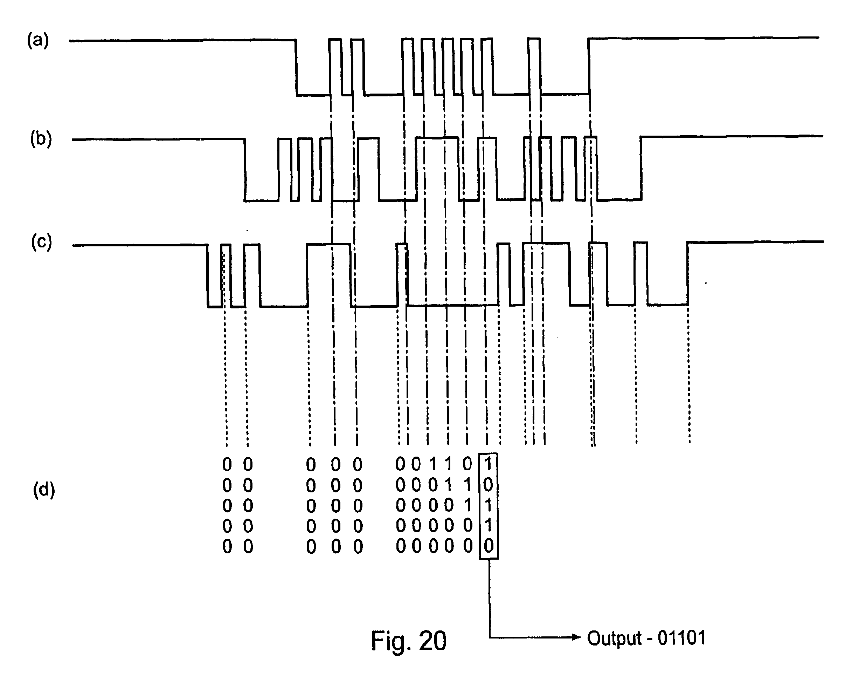

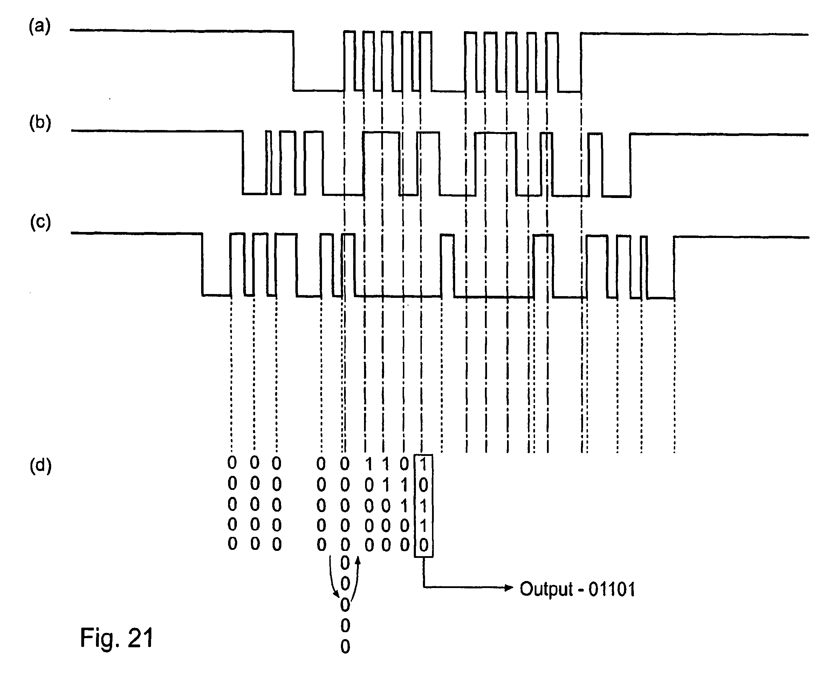

Figures 20(a) and 21(a) show the output of the second signal conditioning circuit 244 as the object 201 passes, oriented as shown in Figures 13 and 14 respectively.
Figures 20(b) and 21(b) show the output of the first signal conditioning circuit 243 as the object 201 passes, oriented as shown in Figures 13 and 14 respectively.
Figures 20(c) and 21(c) show the output of the third signal conditioning circuit 245 as the object 201 passes, oriented as shown in Figures 13 and 14 respectively.
Figures 20(d) and 21(d) show the data read by the microcontroller 241 with the object 201 oriented as shown in Figures 13 and 14 respectively.

Referring to Figures 20 and 21, as the object 201 falls down the coin path 221, the second photo-sensor 229b of the left sensor station 226 and the the second photo-sensor 230b of the right sensor station 226 eventually detect the outer tracks 204 of barcode blocks 203.

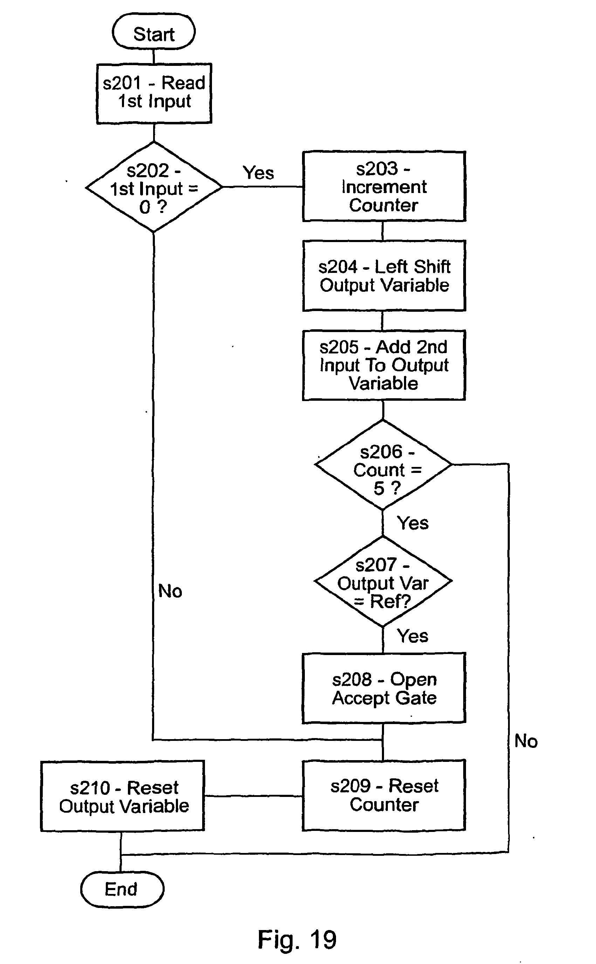

Considering now the case of the left sensor station 226, when the output of the second signal conditioning circuit 244 goes high, the outputs of the first and third signal conditioning circuits 243, 245 are loaded respectively into the first and second latches 249, 250. At the same time, the microcontroller 241 responds to the rising edge on its first interrupt port 258 by performing a first interrupt routine (Figure 19).

In the first interrupt routine, the microcontroller 241 first reads the value at the second 1-bit port 254 (step s201). If this value is 0 (step s202), the microcontroller 241 increments a counter (step s203) and then left-shifts a single-word output data variable (step s204). The microcontroller 241 then adds the value at the first 1-bit port to the output data variable (step s205). At this point, if the value in the counter is 5, i.e. the number of bits in the code to be read from the object 201, (step s206), the output data variable is compared with a reference value (step s207). If the output data variable and the reference value match (step s207), the microcontroller 241 outputs a signal to open the accept gate (step s208). In either case, the counter is reset to 0 (step s209) and the output data variable is reset to 00000 (step s210).

If the answer at step s206 is no, the interrupt routine terminates.

If the input value is found to be 1 at step s202, the counter is reset to 0 (step s209) and the output data variable is reset to 00000 (step s210).

The processing in response to signals from the right sensor station 227 is performed by a second interrupt routine which is identical to the first except that the 5-least significant bits of the reference value are reversed to reflect the different orders in which the bits are read. For example, if the reference value for the left sensor station 226 is 00001101, the reference for the right sensor station 227 will be 00010110.

A timer may be set in each of the interrupt routines. On expiry the timer triggers a third interrupt routine that resets the counters and output data variables. The timer period is preferably set to be slightly longer that the effective clock period set by the pitch of the outer tracks 204.

A monostable mulitvibrator may be included between the accept gate control output of the microcontroller 241 and the accept gate actuator to prevent the actuator only responds to the first accept gate open signal that the microcontroller 241 produces for the object 201 currently being analysed.

Many modifications may be made to the described embodiments. For instance, the data need not be a single number of character code and may represent a plurality of numbers or character codes.

The discrete optical sensors at each sensor station for sensing the bar code elements may be replaced by a linear CCD optical sensor. If a linear CCD optical sensor is used, some elements may be masked to prevent cros/s-talk between the signals produced by the data, clock and start reference tracks. Also, the alternating emitter/sensor arrangement described above could be replaced by an arrangement wherein the row of emitters at a sensor station is arranged immediately above or below a row of sensors.

## Claims

1. A method of bar coding an object comprising:
forming a data pattern (3; 104; 205) on an object (1;101; 201), and
forming a clock pattern (4; 103; 204) on the object (1; 101; 201), the clock pattern (4; 104; 204) being aligned with the data pattern (3; 103; 205) for providing a data pattern sampling signal and arranged in a ring,
**characterised in that** the data pattern (3; 104; 205) comprises a plurality of repetitions of the same information arranged in a ring such that a complete instance of said information can be obtained by scanning the data pattern chordally, the method further including forming a substantially circular reference pattern (5; 105) concentric with the clock pattern (4; 103), the reference pattern identifying the start of each repetition of said information.

2. A method according to claim 1, wherein the clock pattern (4;103) and the data pattern (3; 104) are formed as concentric rings.

3. A method according to claim 1 or 2, wherein the data pattern (3) is located inwards of the clock pattern (4).

4. A method according to claim 1, wherein the data pattern (3) is located within the clock pattern (4) and the clock pattern is located inwards of the reference pattern (5).

5. A method according to claim 1, wherein the clock pattern (103) is located within the data pattern (104) and the data pattern (104) is located inwards of the reference pattern (105).

6. A method according to claim 1, wherein the clock pattern (204) comprises a plurality of repetitions of a straight clock pattern segment and each instance of the data pattern (205) is straight and has a clock pattern segment arranged in parallel alongside it.

7. A method according to claim 6, including marking the start of each instance of the data pattern.

8. A method of forming a coin-like object including bar coding the object by a method according to any one of claims 1 to 7.

9. A bar-coded object having a data pattern (3; 104, 205) and a clock pattern (4; 103; 204) formed as concentric rings, the clock pattern (4; 103; 204) being aligned with the data pattern (3; 104; 205) for providing a data pattern sampling reference, **characterised in that** the data pattern (3; 104; 205) comprises a plurality of repetitions of the same information arranged in a ring such that a complete instance of said information can be obtained by scanning the data pattern (3;104; 205) chordally, the object further including a substantially circular reference pattern (5; 105) concentric with the clock pattern (4; 103), the reference pattern (5; 105) identifying the start of each repetition of said information.

10. An object according to claim 9, wherein the data pattern (3; 104; 205) is located inwards of the clock pattern (4; 103; 204).

11. An object according to claim 9, wherein the data pattern (3) is located within the clock pattern (4) and the clock pattern (4) is located inwards of the reference pattern (5).

12. An object according to claim 9, wherein the clock pattern (103) is located within the data pattern (104) and the data pattern (104) is located inwards of the reference pattern (105).

13. An object according to claim 9, wherein the clock pattern (204) comprises a plurality of repetitions of a straight clock pattern segment and each instance of the data pattern information is straight and has a clock pattern segment arranged in parallel alongside it.

14. An object according to claim 13, including a marking (206) at the start of each instance of the data pattern.

15. A coin-like object according to any one of claims 9 to 14.

16. A method of reading a bat-coded object according to claim 9, the method comprising:-
simultaneously scanning said patterns (3, 4, 5; 103, 104, 105; 204, 205, 206) chordally; and
determining the values of data pattern elements at times defined by said clock pattern (4; 103; 204).

17. A method according to claim 16, including re-ordering said pattern element values to recover said information.

18. A method according to claim 17, wherein said re-ordering comprises identifying a start position and moving a bit from before the start position to a position after the start position.

19. A method according to claim 16, including:
simultaneously scanning chordally another part of each of the patterns (3, 4, 5; 103, 104, 105; 204, 205, 206);
comparing the values of the data elements obtained in each scanning of the data pattern; and
signalling an error condition if there is a mismatch between information represented by the values obtained from said scans of the data pattern.

20. A method according to claim 16, wherein the data pattern (3; 104; 205), the clock pattern (4; 103; 204) and a start position reference pattern (5; 105; 206) are sensed by respective sensors (29a, 29b, 29c) along parallel chordal paths.

21. A method according to claim 20, wherein a representation of said information is built from the output of the data pattern sensor (29b; 29c) and cleared in dependence on the output of the start position reference pattern sensor (29a).

22. A method according to claim 21, including counting each bit as it is added to said representation, performing an action when the bit count reaches a predetermined value and resetting the bit count in dependence on the output of the start position reference pattern sensor.

23. A method according to claim 22, wherein said action is only performed if said representation meets a predetermined criterion.

24. A bar code reading apparatus adapted to read a bar code on an object according to claim 9, the apparatus comprising:
scanning means (26; 226) adapted to simultaneously scan said patterns (3, 4, 5; 103, 104, 105; 204, 205, 206) chordally using a substantially straight scan line; and
means (41; 241) adapted to determine the values of data pattern elements at times defined by said clock pattern (4; 103; 204).

25. An apparatus according to claim 24, including processing means (41; 241) for re-ordering said pattern element values to recover said information.

26. An apparatus according to claim 25, wherein said re-ordering comprises identifying a start position and moving a bit from before the start position to a position after the start position.

27. An apparatus according to claim 24, including:
means (27; 227) for simultaneously scanning chordally another part of each of the patterns (3, 4, 5; 103, 104, 105; 204, 205, 206);
means (41; 241) for comparing the values of the data elements obtained in each scanning of the data pattern (3; 104; 205); and
means (41; 241) for signalling an error condition if there is a mismatch between information represented by the values obtained from said scans of the data pattern (3; 104; 205).

28. An apparatus according to claim 24, 25 or 26, wherein the sensor means (26; 226) comprises a first sensor (29c; 29b; 229b) for sensing the data pattern (3; 104; 205), a second sensor (29b; 29c; 229a) for sensing the clock pattern (4; 103; 204) and a third sensor (29a; 229c) for sensing the start position reference pattern (5; 205; 206).

29. An apparatus according to claim 28, including processing means (41) configured such that a representation of said information is built from the output of the first sensor (29c; 29b) and cleared in dependence on the output of the third sensor (29a).

30. An apparatus according to claim 29, wherein the processing means (241) counts pattern elements during said building and resets the pattern element count in dependence on the output of the third sensor (229c).

31. An apparatus according to claim 30, wherein the processing means (241) is configured to produce an output if said reference meets a predetermined criterion when the pattern element count is at a threshold value.

32. A validator for coin-like objects including an apparatus according to any one of claims 24 to 31.

## Patentansprüche

1. Verfahren zum Strichkodieren eines Objekts, umfassend:
Bilden eines Datenmusters (3; 104; 205) auf einem Objekt (1; 101; 201), und
Bilden eines Taktmusters (4; 103; 204) auf dem Objekt (1; 101; 201), wobei das Taktmuster (4; 104; 204) mit dem Datenmuster (3; 103; 205) ausgerichtet ist, um ein Datenmuster-Abtastsignal zur Verfügung zustellen, und in einem Ring angeordnet ist,
**dadurch gekennzeichnet, dass** das Datenmuster (3; 104; 205) eine Mehrzahl von in einem Ring angeordneten Wiederholungen der selben Informationen umfaßt, so dass eine vollständige Instanz der Informationen erhalten werden kann, indem das Datenmuster sehnenmäßig gescannt wird, wobei das Verfahren ferner die Ausbildung eines im wesentlichen kreisförmigen Referenzmusters (5; 105) aufweist, das mit dem Taktmuster (4; 103) konzentrisch ist, wobei das Referenzmuster den Beginn jeder Wiederholung der Informationen identifiziert.

2. Verfahren nach Anspruch 1, wobei das Taktmuster (4; 103) und das Datenmuster (3; 104) als konzentrische Ringe ausgebildet sind.

3. Verfahren nach Anspruch 1 oder 2, wobei sich das Datenmuster (3) einwärts des Taktmusters (4) befindet.

4. Verfahren nach Anspruch 1, wobei sich das Datenmuster (3) innerhalb des Taktmusters (4) befindet und sich das Taktmuster einwärts des Referenzmusters (5) befindet.

5. Verfahren nach Anspruch 1, wobei sich das Taktmuster (103) innerhalb des Datenmusters (104) befindet und sich das Datenmuster (104) einwärts des Referenzmusters (105) befindet.

6. Verfahren nach Anspruch 1, wobei das Taktmuster (204) eine Mehrzahl von Wiederholungen eines geradlinigen Taktmustersegments umfaßt und jede Instanz des Datenmusters (205) geradlinig ist und ein parallel neben ihr angeordnetes Taktmustersegment aufweist.

7. Verfahren nach Anspruch 6, aufweisend das Markieren des Beginns jeder Instanz des Datenmusters.

8. Verfahren zur Ausbildung eines münzähnlichen Objekts, einschließlich Strichkodieren des Objekts durch ein Verfahren nach einem der Ansprüche 1 bis 7.

9. Strichkodiertes Objekt, das ein Datenmuster (3; 104; 205) und ein Taktmuster (4; 103; 204) aufweist, die als konzentrische Ringe ausgebildet sind, wobei das Taktmuster (4; 103; 204) mit dem Datenmuster (3; 104; 205) ausgerichtet ist, um eine Datenmuster-Abtastreferenz zur Verfügung zu stellen, **dadurch gekennzeichnet, dass** das Datenmuster (3; 104; 205) eine Mehrzahl von in einem Ring angeordnete Wiederholungen der selben Informationen umfaßt, so dass eine vollständige Instanz der Informationen durch sehnenmäßiges Scannen des Datenmusters (3; 104; 205) erhalten werden kann, wobei das Objekt ferner ein im wesentlichen kreisförmiges Referenzmuster (5; 105) aufweist, das mit dem Taktmuster (4; 103) konzentrisch ist, wobei das Referenzmuster (5; 105) den Beginn jeder Wiederholung der Informationen identifiziert.

10. Objekt nach Anspruch 9, wobei sich das Datenmuster (3; 104; 205) einwärts des Taktmusters (4; 103; 204) befindet.

11. Objekt nach Anspruch 9, wobei sich das Datenmuster (3) innerhalb des Taktmusters (4) befindet und sich das Taktmuster (4) einwärts des Referenzmusters (5) befindet.

12. Objekt nach Anspruch 9, wobei sich das Taktmuster (103) innerhalb des Datenmusters (104) befindet und sich das Datenmuster (104) einwärts des Referenzmusters (105) befindet.

13. Objekt nach Anspruch 9, wobei das Taktmuster (204) eine Mehrzahl von Wiederholungen eines geradlinigen Taktmustersegments umfaßt und jede Instanz der Datenmusterinformationen geradlinig ist und ein parallel neben ihr angeordnetes Taktmustersegment aufweist.

14. Objekt nach Anspruch 13, aufweisend eine Markierung (206) am Beginn jeder Instanz des Datenmusters.

15. Münzähnliches Objekt nach einem der Ansprüche 9 bis 14.

16. Verfahren zum Lesen eines strichkodierten Objekts nach Anspruch 9, wobei das Verfahren umfaßt:
gleichzeitiges sehnenmäßiges Scannen der Muster (3, 4, 5; 103, 104, 105; 204, 205, 206); und
Ermitteln der Werte von Datenmusterelementen zu Zeitpunkten, die durch das Taktmuster (4; 103; 204) definiert werden.

17. Verfahren nach Anspruch 16, aufweisend eine Neuordnung der Musterelementwerte, um die Informationen wiederherzustellen.

18. Verfahren nach Anspruch 17, wobei die Neuordnung die Identifizierung einer Startposition und das Bewegen eines Bits von vor der Startposition an eine Position nach der Startposition umfaßt.

19. Verfahren nach Anspruch 16, aufweisend:
gleichzeitiges sehnenmäßiges Scannen eines anderen Teils jedes der Muster (3, 4, 5; 103, 104, 105; 204, 205, 206);
Vergleichen der Werte der Datenelemente, die bei jedem Scannen der Datenmuster erhalten wurden; und
Signalisieren einer Fehlerbedingung, wenn es eine Diskrepanz zwischen Informationen gibt, die durch die Werte repräsentiert werden, die aus den Scans des Datenmusters erhalten wurden.

20. Verfahren nach Anspruch 16, wobei das Datenmuster (3; 104; 205), das Taktmuster (4; 103; 204) und ein Startposition-Referenzmuster (5; 105; 206) von entsprechenden Sensoren (29a, 29b, 29c) entlang paralleler Sehnenpfade erkannt werden.

21. Verfahren nach Anspruch 20, wobei eine Repräsentation der Informationen aus dem Ausgangssignal des Datenmustersensors (29b; 29c) aufgebaut und in Abhängigkeit vom Ausgangssignal des Startposition-Referenzmustersensors (29a) gelöscht wird.

22. Verfahren nach Anspruch 21, aufweisend das Zählen jedes Bits, während es zur Repräsentation hinzugefügt wird, Durchführen einer Maßnahme, wenn der Bitzählwert einen vorgegebenen Wert erreicht, und Zurücksetzen des Bitzählwerts in Abhängigkeit vom Ausgangssignal des Startposition-Referenzmustersensors.

23. Verfahren nach Anspruch 22, wobei die Maßnahme nur durchgeführt wird, wenn die Repräsentation ein vorgegebenes Kriterium erfüllt.

24. Strichkode-Lesevorrichtung, die dazu ausgelegt ist, einen Strichkode auf einem Objekt nach Anspruch 9 zu lesen, wobei die Vorrichtung umfaßt:
eine Scaneinrichtung (26; 226), die dazu ausgelegt ist, die Muster (3, 4, 5; 103, 104, 105; 204, 205, 206) unter Verwendung einer im wesentlichen geradlinigen Scanlinie gleichzeitig sehnenmäßig zu scannen; und
eine Einrichtung (41, 241) die dazu ausgelegt sind, die Werte der Datenmusterelemente zu Zeitpunkten zu ermitteln, die durch das Taktmuster (4; 103; 204) definiert werden.

25. Vorrichtung nach Anspruch 24, aufweisend eine Verarbeitungseinrichtung (41; 241) zum Neuordnen der Musterelementwerte, um die Informationen wiederherzustellen.

26. Vorrichtung nach Anspruch 25, wobei das Neuordnen das Identifizieren einer Startposition und das Bewegen eines Bits von vor der Startposition an eine Position nach der Startposition umfaßt.

27. Vorrichtung nach Anspruch 24, aufweisend:
eine Einrichtung (27; 227) zum gleichzeitigen sehnenmäßigen Scannen eines anderen Teils jedes der Muster (3, 4, 5; 103, 104, 105; 204, 205, 206);
eine Einrichtung (41; 241) zum Vergleichen der Werte der Datenelemente, die bei jedem Scannen des Datenmusters (3; 104; 205) erhalten wurden; und
eine Einrichtung (41; 241) zum Signalisieren einer Fehlerbedingung, wenn es eine Diskrepanz zwischen Informationen gibt, die durch die Werte repräsentiert werden, die aus den Scans des Datenmusters (3; 104; 205) erhalten wurden.

28. Vorrichtung nach Anspruch 24, 25 oder 26, wobei die Sensoreinrichtung (26; 226) einen ersten Sensor (29c; 29b; 229b) zum Erkennen des Datenmusters (3; 104; 205), einen zweiten Sensor (29b; 29c; 229a) zum Erkennen des Taktmusters (4; 103; 204) und einen dritten Sensor (29a; 229c) zum Erkennen des Startposition-Referenzmusters (5; 205; 206) umfaßt.

29. Vorrichtung nach Anspruch 28, aufweisend eine Verarbeitungseinrichtung (41), die so konfiguriert ist, dass eine Repräsentation der Informationen aus dem Ausgangssignal des ersten Sensors (29c; 29b) aufgebaut und in Abhängigkeit vom Ausgangssignal des dritten Sensors (29a) gelöscht wird.

30. Vorrichtung nach Anspruch 29, wobei die Verarbeitungseinrichtung (241) während des Aufbauens Musterelemente zählt und den Musterelement-Zählwert in Abhängigkeit vom Ausgangssignal des dritten Sensors (229c) zurücksetzt.

31. Vorrichtung nach Anspruch 30, wobei die Verarbeitungseinrichtung (241) dazu konfiguriert ist, ein Ausgangssignal zu erzeugen, wenn die Referenz ein vorgegebenes Kriterium erfüllt, wenn sich der Musterelement-Zählwert auf einem Schwellenwert befindet.

32. Prüfvorrichtung für münzähnliche Objekte, die eine Vorrichtung nach einem der Ansprüche 24 bis 31 aufweist.

## Revendications

1. Procédé pour appliquer un code à barres sur un objet comprenant :
la formation d'un motif de données (3 ; 104 ; 205) sur un objet (1 ; 101 ; 201), et
la formation d'un motif d'horloge (4 ; 103 ; 204) sur cet objet (1 ; 101 ; 201), ce motif d'horloge (4 ; 104 ; 204) étant aligné avec le motif de données (3 ; 103 ; 205) pour fournir un signal d'échantillonnage de motif de données et disposé en un cercle,
**caractérisé en ce que** le motif de données (3 ; 104 ; 205) comprend une pluralité de répétitions de la même information disposées en un cercle de façon à ce qu'une occurrence complète de ladite information puisse être obtenue en balayant le motif de données sur la corde, ce procédé comprenant en outre la formation d'un motif de référence essentiellement circulaire (5 ; 105) concentrique avec le motif d'horloge (4 ; 103) , ce motif de référence identifiant le début de chaque répétition de ladite information.

2. Procédé selon la revendication 1, dans lequel le motif d'horloge (4 ; 103) et le motif de données (3 ; 104) sont formés comme des cercles concentriques.

3. Procédé selon la revendication 1 ou 2, dans lequel le motif de données (3) est situé vers l'intérieur du motif d'horloge (4).

4. Procédé selon la revendication 1, dans lequel le motif de données (3) est situé à l'intérieur du motif d'horloge (4) et le motif d'horloge est situé vers l'intérieur du motif de référence (5).

5. Procédé selon la revendication 1, dans lequel le motif d'horloge (103) est situé à l'intérieur du motif de données (104) et le motif de données (104) est situé vers l'intérieur du motif de référence (105).

6. Procédé selon la revendication 1, dans lequel le motif d'horloge (204) comprend une pluralité de répétitions d'un segment droit de motif d'horloge et chaque occurrence du motif de données (205) est droite et a un segment de motif d'horloge disposé parallèlement le long d'elle.

7. Procédé selon la revendication 6, comprenant le marquage du début de chaque occurrence du motif de données.

8. Procédé de formation d'un objet semblable à une pièce de monnaie comprenant l'application d'un code à barres sur l'objet au moyen d'un procédé selon l'une quelconque des revendications 1 à 7.

9. Objet avec code à barres ayant un motif de données (3 ; 104 ; 205) et un motif d'horloge (4 ; 103 ; 204) formés comme des cercles concentriques, le motif d'horloge (4 ; 103 ; 204) étant aligné avec le motif de données (3 ; 104 ; 205) pour fournir une référence d'échantillonnage de motif de données, **caractérisé en ce que** le motif de données (3 ; 104 ; 205) comprend une pluralité de répétitions de la même information disposées en un cercle de façon à ce qu'une occurrence complète de ladite information puisse être obtenue en balayant le motif de données (3 ; 104 ; 205) sur la corde, cet objet comprenant en outre un motif de référence essentiellement circulaire (5 ; 105) concentrique avec le motif d'horloge (4 ; 103) , ce motif de référence (5 ; 105) identifiant le début de chaque répétition de ladite information.

10. Objet selon la revendication 9, dans lequel le motif de données (3 ; 104 ; 205) est situé vers l'intérieur du motif d'horloge (4 ; 103 ; 204).

11. Objet selon la revendication 9, dans lequel le motif de données (3) est situé à l'intérieur du motif d'horloge (4) et le motif d'horloge (4) est situé vers l'intérieur du motif de référence (5).

12. Objet selon la revendication 9, dans lequel le motif d'horloge (103) est situé à l'intérieur du motif de données (104) et le motif de données (104) est situé vers l'intérieur du motif de référence (105).

13. Objet selon la revendication 9, dans lequel le motif d'horloge (204) comprend une pluralité de répétitions d'un segment droit de motif d'horloge et chaque occurrence de l'information du motif de données est droite et a un segment de motif d'horloge disposé parallèlement le long d'elle.

14. Objet selon la revendication 13, comprenant une marque (206) au début de chaque occurrence du motif de données.

15. Objet semblable à une pièce de monnaie selon l'une quelconque des revendications 9 à 14.

16. Procédé de lecture d'un objet avec code à barres selon la revendication 9, ce procédé comprenant :-
le balayage simultané desdits motifs (3, 4, 5 ; 103, 104, 105 ; 204, 205, 206) sur la corde ; et
la détermination des valeurs des éléments du motif de données à des moments définis par ledit motif d'horloge (4 ; 103 ; 204).

17. Procédé selon la revendication 16, comprenant la remise en ordre desdites valeurs des éléments du motif pour récupérer ladite information.

18. Procédé selon la revendication 17, dans lequel ladite remise en ordre comprend l'identification d'une position de début et le déplacement d'un bit d'une position avant la position de début dans une position après la position de début.

19. Procédé selon la revendication 16 comprenant :
le balayage simultané sur la corde d'une autre partie de chacun des motifs (3, 4, 5 ; 103, 104, 105 ; 204, 205, 206) ;
la comparaison des valeurs des éléments de données obtenus lors de chaque balayage du motif de données ; et
la signalisation d'une condition d'erreur s'il y a une disparité entre l'information représentée par les valeurs obtenues à partir desdits balayages du motif de données.

20. Procédé selon la revendication 16, dans lequel le motif de données (3; 104; 205), le motif d'horloge (4 ; 103 ; 204) et un motif de référence de position de début (5 ; 105 ; 206) sont détectés par des capteurs respectifs (29a, 29b, 29c) le long de chemins parallèles sur la corde.

21. Procédé selon la revendication 20, dans lequel une représentation de ladite information est établie à partir de la sortie du capteur de motif de données (29b ; 29c) et effacée en dépendance de la sortie du capteur de motif de référence de position de début (29a).

22. Procédé selon la revendication 21, comprenant le comptage de chaque bit alors qu'il est ajouté à ladite représentation, l'exécution d'une action lorsque le compte de bits atteint une valeur prédéterminée et la remise à zéro du compte de bits en dépendance de la sortie du capteur du motif de référence de position de début.

23. Procédé selon la revendication 22, dans lequel ladite action n'est exécutée que si ladite représentation répond à un critère prédéterminé.

24. Appareil de lecture de code à barres adapté de façon à lire un code à barres sur un objet selon la revendication 9, cet appareil comprenant :
un moyen de balayage (26 ; 226) adapté de façon à balayer simultanément lesdits motifs (3, 4, 5 ; 103, 104, 105 ; 204, 205, 206) sur la corde en utilisant une ligne de balayage essentiellement droite ; et
un moyen (41, 241) adapté de façon à déterminer les valeurs des éléments du motif de données à des moments définis par ledit motif d'horloge (4 ; 103 ; 204).

25. Appareil selon la revendication 24, comprenant un moyen de traitement (41 ; 241) pour remettre en ordre desdites valeurs des éléments du motif pour récupérer ladite information.

26. Appareil selon la revendication 25, dans lequel ladite remise en ordre comprend l'identification d'une position de début et le déplacement d'un bit d'une position avant la position de début dans une position après la position de début.

27. Appareil selon la revendication 24, comprenant :
un moyen (27 ; 227) pour balayer simultanément sur la corde une autre partie de chacun des motifs (3, 4, 5 ; 103, 104, 105 ; 204, 205, 206) ;
un moyen (41 ; 241) pour comparer les valeurs des éléments de données obtenus lors de chaque balayage du motif de données (3 ; 104 ; 205) ; et
un moyen (41 ; 241) pour signaliser une condition d'erreur s'il y a une disparité entre l'information représentée par les valeurs obtenues à partir desdits balayages du motif de données (3 ; 104 ; 205).

28. Appareil selon la revendication 24, 25 ou 26, dans lequel le moyen capteur (26 ; 226) comprend un premier capteur (29c ; 29b ; 229b) pour détecter le motif de données (3 ; 104 ; 205), un deuxième capteur (29b ; 29c ; 229a) pour détecter le motif d'horloge (4 ; 103 ; 204) et un troisième capteur (29a ; 229c) pour détecter le motif de référence de position de début (5 ; 205 ; 206).

29. Appareil selon la revendication 28, comprenant un moyen de traitement (41) configuré de façon à ce qu'une représentation de ladite information soit établie à partir de la sortie du premier capteur (29c ; 29b) et effacée en dépendance de la sortie du troisième capteur (29a).

30. Appareil selon la revendication 29, dans lequel le moyen de traitement (241) compte des éléments du motif pendant ledit établissement et remet à zéro le compte d'éléments du motif en dépendance de la sortie du troisième capteur (229c).

31. Appareil selon la revendication 30, dans lequel le moyen de traitement (241) est configuré de façon à produire une sortie si ladite référence répond à un critère prédéterminé lorsque le compte d'éléments du motif est à une valeur de seuil.

32. Validateur pour des objets semblables à des pièces de monnaie comprenant un appareil selon l'une quelconque des revendications 24 à 31.
